# EUROPÄISCHE PATENTSCHRIFT

(11) **EP 2 417 490 B1**
(45) Veröffentlichungstag und Bekanntmachung des Hinweises auf die Patenterteilung: **11.05.2016**
(21) Anmeldenummer: 10716458.4
(22) Anmeldetag: 13.03.2010
(51) Int. Cl.: G02B 27/28, G02F 1/09

(54) **OPTISCHER ISOLATOR MIT QUADERFÖRMIGEN MAGNETEN**
OPTICAL ISOLATOR HAVING PARALLELEPIPED-SHAPED MAGNETS
ISOLATEUR OPTIQUE COMPRENANT DES AIMANTS PARALLÉLÉPIPÉDIQUES

(30) Priorität: 09.04.2009 DE 102009016950
(43) Veröffentlichungstag der Anmeldung: 15.02.2012
(73) Patentinhaber: TRUMPF Laser GmbH, 78713 Schramberg (DE)
(72) Erfinder: NICKLAUS, Kolja, 88045 Friedrichshafen (DE); SEYFFERT, Gerrit, 07749 Jena (DE)
(74) Vertreter: Kohler Schmid Möbus Patentanwälte
(86) Internationale Anmeldenummer: PCT/DE2010/000273
(87) Internationale Veröffentlichungsnummer: WO 2010/115392

(56) Entgegenhaltungen:
- US-B1- 7 336 858

## Beschreibung

Die vorliegende Erfindung betrifft einen optischen Isolator für optische Strahlung hoher Leistung. Ein solcher optischer Isolator besteht aus einem Polarisationsrotator auf Basis des Faraday-Effekts und je einer vor- und nachgeschalteten Polarisatoranordnung.

Optische Isolatoren sind beispielsweise im Bereich der optischen Telekommunikation sowohl für polarisierte als auch für unpolarisierte Strahlung bekannt. Diese Isolatoren werden bis zu einer Leistung von ca. 1 W eingesetzt und nutzen zur Drehung der Polarisation des optischen elektromagnetischen Feldes ferromagnetische Faraday-aktive Medien (sogenannte Faradaymedien) mit sehr großer Verdetkonstante wie beispielsweise YIG- oder BIG-Kristalle. Durch die große Verdetkonstante reichen vergleichweise kleine Magnetfelder aus, die beispielsweise durch einen einfachen kleinen Permanentmagneten erzeugt werden können.

Für den Hochleistungsbereich von einigen Watt und mehr mittlerer optischer Leistung sind die bekannten ferromagnetischen Faradaymedien aufgrund ihrer geringen optischen Qualität und hohen Absorption nicht geeignet. Hier kommen typischerweise paramagnetische Kristalle und Gläser zum Einsatz wie beispielsweise Tb:Glas oder TGG-Kristalle, die eine um ein bis zwei Größenordnungen geringere Verdetkonstante aufweisen. Bei einer Verdetkonstante von TGG von 22,7 °/ (Tcm) bei einer Wellenlänge von 1064 nm beträgt die benötigte Kristalllänge für eine Polarisationsdrehung von 45°, wie sie in Faraday-Isolatoren benötigt wird, bei einer Magnetfeldstärke von 1 T ca. 20 mm.

Zur Erzeugung eines derartigen Magnetfeldes über eine Länge von 20 mm bei einer typischen Apertur von einigen Millimetern reicht ein einzelner Permanentmagnet nicht aus. Vielmehr werden bestimmte Anordnungen von Magneten genutzt, die die Magnetfeldstärke in der freien Apertur erhöhen, und dabei über den Aperturquerschnitt möglichst homogen bleiben.

In der EP 1660 931 B1 ist eine rotationsymmetrische Anordnung beschrieben, die ein starkes homogenes Magnetfeld in der freien Apertur für ein einzelnes zylinderförmiges Faradaymedium ermöglicht. Im Fall von zwei Faradaymedien oder einem Medium mit hohem Aspektverhältnis wird jedoch eine sehr große kreisförmige freie Apertur benötigt, wodurch die Anordnung einen großen Bauraum einnimmt.
In der US 5 528 415 ist eine Anordnung von prismenförmigen Magneten mit einem Trapez als Grundfläche mit rechteckigen Außenmaßen beschrieben, welche eine quadratische Apertur aufweist und bei der im Bereich des eingeschlossenen Innenkreises ebenfalls ein homogenes Feld erreicht wird. Im Fall von zwei Faradaymedien oder einem Medium mit hohem Aspektverhältnis wird jedoch eine sehr große quadratische freie Apertur benötigt, wodurch die Anordnung wiederum einen großen Bauraum einnimmt. Wird die Anordnung nur in einer Richtung skaliert, so wird das Magnetfeld in der Apertur inhomogen, wodurch die Rotation der Polarisation bzw. optische Isolation beeinträchtigt wird.

US 7 336 858 B1 offenbart einen optischen Isolator für Hochleistungsbetrieb, der auf optischen Fasern basiert.

Für optische Isolatoren für linear polarisierte Strahlung ist der Einsatz von Polarisationsprimen (z.B. Glan-Taylor, Glan, Tompson, Rochon, Wollaston), Strahlteilerwürfeln oder Brewsterpolarisatoren bekannt.
Für optische Isolatoren für unpolarisierte Strahlung ist der Einsatz von doppelbrechenden Prismen, die eine Winkelaufspaltung in zwei Strahlen mit senkrecht zueinander stehender linearer Polarisation, bzw. von doppelbrechenden Strahlversetzern, die einen Parallelversatz zwischen zwei senkrecht zueinander stehenden linearen Polarisationen erzeugen, bekannt.
Nach dem Durchlaufen des Faraday-Rotators werden diese beiden Strahlen wieder räumlich und im Winkel übereinandergelegt. Entscheidend für die Strahlparameter des rekombinierten Strahls nach dem Isolator ist die Güte der Überlagerung, d.h. der Fehler in Parallelversatz und Winkel. Während ein kleiner Parallelversatz (z.B. hervorgerufen durch leicht unterschiedlich lange Strahltrenner und -rekombinierer) nur zu einer geringen Änderung der Strahlqualität führt, führt ein Winkelfehler schon bei einer Größe von etwa 30" bei optischer Grundmodestrahlung zu einer Verschiebung der beiden Polarisationen im Fokus von etwa 30%, und somit zu einer signifikanten Verschlechterung der Strahlqualität und der Spotgröße im Fokus. 30" Winkeltoleranz stellen bei der Ausrichtung von Prismen bzw. Anordnungen aus einzelnen Komponenten eine sehr hohe Anforderung dar.
Für die Herstellung doppelbrechender Prismen bei kleiner optischer Leistung ist der Einsatz von Kalkspat bekannt, im Bereich hoher Leistung ist der Einsatz von YVO-Kristallen bekannt. Aufgrund der relativ geringen Doppelbrechung kann mit derartigen Prismen jedoch nur ein Winkel von maximal 3° zwischen den beiden Polarisationen erreicht werden, so dass zu einer Separation der Strahlen bei einem typischen Strahldurchmesser im Hochleistungsbereich von einigen Millimetern eine große Strecke oder alternativ ein Raumfilter benötigt wird.
Bei den doppelbrechenden Strahlversetzern beträgt der Parallelversatz ca. 0,1 mm pro 1 mm Kristalllänge. Dies führt bei einem typischen Strahldurchmesser im Hochleistungsbereich von einigen Millimetern zu sehr langen Kristallen von einigen cm Länge, die nur schwer (und damit kostenintensiv) herzustellen sind. Darüber hinaus führt die Restabsorption im Hochleistungsbereich von einigen hundert Watt zu thermischen Linsen im Material, und somit zu einer ungewollten Änderung der Strahlparameter durch den Isolator.
Neben den doppelbrechenden Optiken ist der Einsatz monolithischer Bauteile mit mehreren Funktionsbeschichtungen bekannt. Diese lassen sich mit hoher Genauigkeit fertigen, haben jedoch den Nachteil eines sehr aufwändigen und damit kostenintensiven Beschichtungsprozesses und darüber hinaus eines langen Strahlengangs innerhalb des Materials und damit durch die Restabsorption im Hochleistungsbereich von einigen hundert Watt von thermischen Linsen im Material, die zu einer ungewollten Änderung der Strahlparameter führen.
Alternativ können Anordnungen aus Polarisationsprismen, Strahlteilerwürfeln oder Brewsterpolarisatoren zur Strahltrennung und Rekombination genutzt werden. Hier stellt jedoch die notwendige Parallelität der Flächen zueinander eine besondere Herausforderung dar.
Ausgehend hiervon ist es Aufgabe der Erfindung eine Anordnung für einen optischen Isolator für Strahlung hoher optischer Leistung zu finden, der bei kompakter Baugröße ein homogenes Magnetfeld innerhalb der Apertur bereitstellt, sowie eine minimale thermische Linse mit einer hohen Genauigkeit der Ausrichtung der Polarisatorflächen zueinander verbindet.

Erfindungsgemäß wird die Aufgabe gelöst durch die Merkmale von Anspruch 1.

Vorteilhafte Ausführungsformen sind in den abhängigen Ansprüchen aufgeführt. Vorteilig bei einer solchen Magnetanordnung ist, dass eine Skalierung der freien Apertur der Anordnung entlang einer Richtung unter Beibehaltung der Homogenität des über die Länge integrierten Magnetfeldes von 5 % (±2,5 %) möglich wird. Hierdurch wird gegenüber dem Stand der Technik eine sehr kompakte Anordnung mit einfachen, und damit kostengünstigen, Magnetformen ermöglicht.
Das Aspektverhältnis (Länge / Breite / Tiefe) der Magnetanordnung ist dabei in Abhängigkeit der freien Apertur und benötigten Länge des Faradaymediums so zu optimieren, dass ein homogenes, über die Länge integriertes, Magnetfeld in der freien Apertur entsteht, wobei die Abweichung der Homogenität nicht mehr als 5 % beträgt.

Die Magnetanordnung erzeugt vorzugsweise innerhalb der Apertur ein Magnetfeld von = 0,7 T. Die Apertur der Magnetanordnung entspricht mindestens dem Durchmesser des Faradaymediums und ist vorzugsweise kleiner als das 2-fache dieses Durchmessers. Die Apertur kann auch einem Vielfachen des Durchmessers des Faradaymediums bzw. einem Vielfachen des maximal 2-fachen Durchmessers des Faradaymediums entsprechen, so dass mehrere Faradaymedien nebeneinander innerhalb der Apertur angeordnet werden können.

Die quaderförmigen Magnete der Magnetanordnung können in einer beispielhaften Ausführung an den äußeren Ecken der Anordnung angefast sein. Die Kantenlänge der Magnetanordnung kann beispielsweise um bis ein Viertel dieser Kantenlänge reduziert sein. Dadurch wird der Bauraum noch kompakter, so dass die Magnetanordnung in quaderförmigen oder zylinderförmigen Gehäusen untergebracht werden kann, und die Möglichkeit besteht Befestigungsmittel wie beispielsweise Schrauben oder Passstifte an den ausgesparten Ecken anzubringen. Die Reduzierung der Kantenlänge kann an allen vier Ecken gleichmäßig sein, sie kann jedoch auch variieren.

In die freie Apertur können Abstandshalter eingebracht werden, die verhindern, dass einzelne Magnete die freie Apertur verkleinern können. Solche Abstandshalter sind vorteilig, da die einzelnen Magnete der Anordnung durch ihre Magnetisierung große Kräfte aufeinander ausüben können. Die Abstandshalter können Teil des Außengehäuses, Teil der Halterung des Faradaymediums bzw. der Faradaymedien, separate Bauteile oder mit den Magneten verschmolzen sein.

Der optische Isolator kann mit mindestens einem Polarisationsrotator ausgestattet sein, der eine Ausrichtung der Polarisatoren in einer Ebene ermöglicht wird, wodurch die Gesamtanordnung des optischen Isolators vereinfacht wird. Ein solcher Polarisationsrotator wird typischerweise zwischen Faradaymedium und einem der Polarisatorelemente angeordnet und dreht die Polarisationsrichtung der optischen Strahlung vorzugsweise zusammen mit dem Faradaymedium in der einen Richtung um 0° und in entgegengesetzter Richtung um 90°.

Der optische Isolator kann so ausgestattet sein, dass auch bei Ausrichtung der Polarisatoren nicht in einer Ebene eine vollständige Überlagerung der Polarisationen hinter dem Isolator erfolgt. Dies kann beispielsweise mit doppelbrechenden Kompensatoren oder doppelbrechenden Strahlversetzern erriecht werden, um den optischen Strahlengang in der gewünschten Weise zu verändern.

Ein weiterer Vorteil der Erfindung ist, dass die Polarisatoranordnung aus mehreren Komponenten bestehen kann, ohne dass in der Ausrichtung der Polarisatorflächen eine Abweichung von mehr als 10" auftritt.

Als Faradaymedien können beispielsweise Tb:Glas oder TGG-Kristalle eingesetzt werden. Die Form der Faradaymedien ist typischerweise stabförmig, kann jedoch auch ein hohes Aspektverhältnis aufweisen (sogenannter "Slab") oder als Prismakörper ausgebildet sein.

Die Polarisatoranordnung spaltet vorzugsweise die Strahlung in zwei senkrecht zueinander polarisierte Strahlungsanteile unter genau definiertem Winkel und Versatz auf, oder überlagert zwei derartige senkrecht zueinander polarisierte Strahlungsanteile unter genau definiertem Winkel und Versatz miteinander, und die Ausrichtung der Polarisatorflächen zueinander ist typischerweise besser als 10".

Die Polarisatoren werden vorzugsweise an einen Grundkörper angesprengt. Dadurch wird die hohe Genauigkeit bezüglich der Parallelität des Grundkörpers auf die Ausrichtung der Polarisatoren übertragen, so dass die gewünschte parallele Überlagerung der polarisationsverschiedenen Teilstrahlen erreicht wird, wodurch vorteilig eine Erhaltung der Strahlqualität bei beugungsbegrenzter Strahlung ermöglicht wird.

Die Beschichtung der Polarisatoren wird vorzugsweise nur teilweise auf einer oder auf beiden Polarisatorflächen aufgebracht, wodurch das Ansprengen an einen Grundkörper im unbeschichteten Teil des Polarisators ermöglicht wird.

Die Polarisatoren können alternativ an einen gemeinsamen Grundkörper geklebt oder mittels eines Anschlags an einem Referenzkörper und Klebung an einem Trägerelement befestigt werden. Es sind auch alle anderen geeigneten Fügetechniken mit innigem Kontakt und äquivalenter Wirkung von der Erfindung erfasst.

Die Polarisatoranordnung kann alternativ aus monolithischen Bauteilen bereitgestellt werden.

Die Anordnung des optischen Isolators kann auch derart gestaltet sein, dass ein oder mehrere Faradaymedien innerhalb der Apertur angeordnet sind und mittels Faltung des optischen Strahlengangs und mehrfaches Durchlaufen des Magnetfeldes ein 1- oder mehrstufiger Isolator bereitgestellt wird, wodurch eine höhere optische Isolation bei geringem Platzbedarf erreicht wird.
Die Anordnung des optischen Isolators kann auch derart gestaltet sein, dass zwei oder mehrere erfindungsgemäße optische Isolatoren hintereinander angeordnet sind, wodurch ein 2- oder mehrstufiger Isolator bereitgestellt wird. Hierbei können die sich berührenden Magneten zwischen den einzelnen Stufen miteinander verschmolzen sein, wodurch eine höhere optische Isolation bei geringem Platzbedarf erreicht wird.
Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung, wie in den nachfolgenden Ansprüchen definiert, zu verlassen.
Nachfolgend wird die Erfindung beispielsweise anhand der beigefügten Zeichnungen, die auch erfindungswesentliche Merkmale offenbaren, noch näher erläutert. Es zeigen:
- Fig. 1a: eine schematische Ansicht einer ringförmigen Magnetanordnung (Stand der Technik);
- Fig. 1b: Skalierung einer ringförmigen Magnetanordnung (Stand der Technik);
- Fig. 2a: eine schematische Ansicht einer erfindungsgemäßen quaderförmigen Magnetanordnung;
- Fig. 2b: Skalierung einer erfindungsgemäßen quaderförmigen Magnetanordnung;
- Fig. 3: eine schematische Ansicht eines erfindungsgemäßen optischen Isolators mit Strahlengang in Transmissionsrichtung;
- Fig. 4: die schematische Ansicht eines erfindungsgemäßen optischen Isolators aus Fig. 3 mit Strahlengang in Sperrrichtung;
- Fig. 5: eine schematische Ansicht der erfindungsgemäßen Polarisatoranordnung, bestehend aus 2 Polarisatoren, welche an einen gemeinsamen Grundkörper angesprengt sind;
- Fig. 6: eine erfindungsgemäße Ausführungsform einer kompakten quaderförmigen Magnetanordnung für 2 stabförmige Faradaymedien;
- Fig. 7: eine Schnittzeichnung von Magneten einer erfindungsgemäßen Ausführungsform;
- Fig. 8: Simulation des integrierten Magnetfeldes entlang der optischen Achse gemäß der Magnetanordnung aus Fig. 6 unter Verwendung der Magnete in Fig. 7;
- Fig. 9a: Berechnung der Stärke des entlang der optischen Achse integrierten Magnetfeldes in Abhängigkeit der Kristalllänge des Faradaymediums gemäß der erfindungsgemäßen Ausführungsform aus Fig. 6;
- Fig. 9b: Berechnung der Homogenität des entlang der,optischen Achse integrierten Magnetfeldes in Abhängigkeit der Kristalllänge des Faradaymediums gemäß der erfindungsgemäßen Ausführungsform aus Fig. 6;
- Fig. 10a: eine schematische Ansicht einer erfindungsgemäßen Ausführungsform der Magnete mit angefasten äußeren Ecken der Magnetanordnung;
- Fig. 10b: eine schematische Ansicht einer weiteren erfindungsgemäßen Ausführungsform der Magnete mit angefasten äußeren Ecken der Magnetanordnung;
- Fig. 11: eine Schnittzeichnung von Magneten einer weiteren erfindungsgemäßen Ausführungsform;
- Fig. 12: Simulation des integrierten Magnetfeldes entlang der optischen Achse gemäß der Magnetanordnung aus Fig. 10a unter Verwendung der Magnete in Fig. 11;
- Fig. 13: Berechnung der Stärke des entlang der optischen Achse integrierten Magnetfeldes in Abhängigkeit der Kristalllänge des Faradaymediums gemäß der erfindungsgemäßen Ausführungsform aus Fig. 10a;
- Fig. 14: Berechnung der Homogenität des entlang der optischen Achse integrierten Magnetfeldes in Abhängigkeit der Kristalllänge des Faradaymediums gemäß der erfindungsgemäßen Ausführungsform aus Fig. 10a;
- Fig. 15: eine schematische Ansicht einer weiteren erfindungsgemäßen Magnetanordnung, bestehend aus 12 quaderförmigen Magneten;
- Fig. 16: eine schematische Ansicht eines erfindungsgemäßen zweistufigen optischen Isolators mit Strahlengang in Transmissionsrichtung;
- Fig. 17: eine schematische Ansicht des erfindungsgemäßen zweistufigen optischen Isolators aus Fig. 16 mit Strahlengang in Sperrrichtung;
- Fig. 18: eine schematische Ansicht eines weiteren erfindungsgemäßen zweistufigen optischen Isolators mit Strahlengang in Transmissionsrichtung;
- Fig. 19: eine schematische Ansicht des weiteren erfindungsgemäßen zweistufigen optischen Isolators aus Fig. 18 mit Strahlengang in Sperrrichtung;
- Fig. 20: eine schematische Ansicht eines weiteren erfindungsgemäßen zweistufigen optischen Isolators mit Strahlengang in Transmissionsrichtung;
- Fig. 21: eine schematische Ansicht des weiteren erfindungsgemäßen zweistufigen optischen Isolators aus Fig. 20 mit Strahlengang in Sperrrichtung;
- Fig. 22: eine schematische Ansicht einer weiteren erfindungsgemäßen Polarisatoranordnung, bestehend aus 2 Polarisatoren, welche an einen gemeinsamen Grundkörper angesprengt sind;
- Fig. 23: eine erfindungsgemäße Ausführungsform einer kompakten quaderförmigen Magnetanordnung für 2 stabförmige Faradaymedien mit Abstandshaltern in der freien Apertur;
- Fig. 24: eine schematische Ansicht eines weiteren- erfindungsgemäßen gefalteten optischen Isolators mit Strahlengang in Transmissionsrichtung;
- Fig. 25: eine schematische Ansicht eines weiteren erfindungsgemäßen gefalteten optischen Isolators aus Fig. 24 mit Strahlengang in Transmissionsrichtung;
- Fig. 26: eine schematische Ansicht eines weiteren erfindungsgemäßen gefalteten optischen Isolators mit Strahlengang in Transmissionsrichtung;
- Fig. 27: eine schematische Ansicht eines weiteren erfindungsgemäßen gefalteten optischen Isolators aus Fig. 26 mit Strahlengang in Transmissionsrichtung;

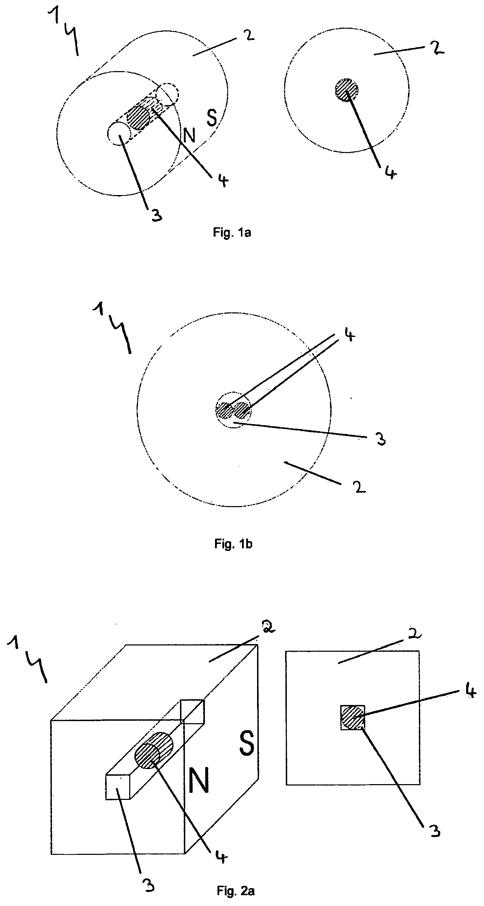

Bei der in den Figuren 1a und 1b gezeigten Ausführungsformen handelt es sich um Anordnungen zum Stand der Technik, wobei die Magnetanordnung (1) aus zylinderförmigen Magneten (2) mit einer Apertur (3) und einem Faradaymedium (4) in der Apertur (3) besteht.

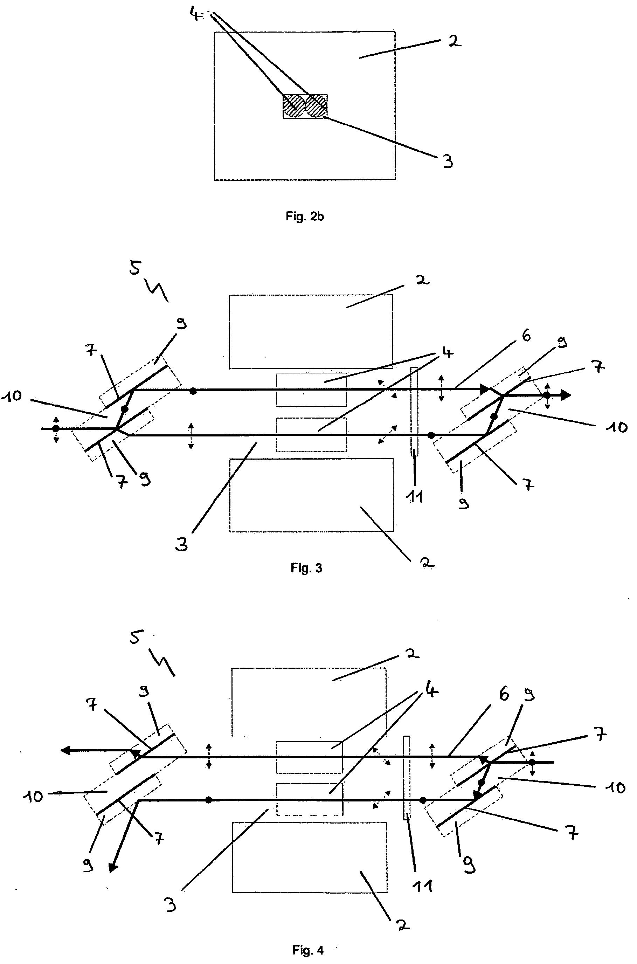

Bei den in den Figuren 2 - 27 gezeigten Ausführungsformen handelt es sich um erfindungsgemäße Ausführungsformen des optischen Isolators und dessen Komponenten.

Bei der in Figur 2a gezeigten Ausführungsform handelt es sich um eine schematische Darstellung der Magnetanordnung (1) bestehend aus quaderförmigen Magneten (2), welche eine Apertur (3) erzeugt, die dem Durchmesser des Faradaymediums (4) entspricht.

Figur 2b zeigt eine Ausführungsform der Magnetanordnung (1) bestehend aus quaderförmigen Magneten (2), die eine Apertur (3) erzeugen, die in einer Richtung dem doppelten Durchmesser eines Faradaymediums (4) entspricht, so dass zwei Faradaymedien (4) nebeneinander innerhalb der Apertur (3) angeordnet werden können.

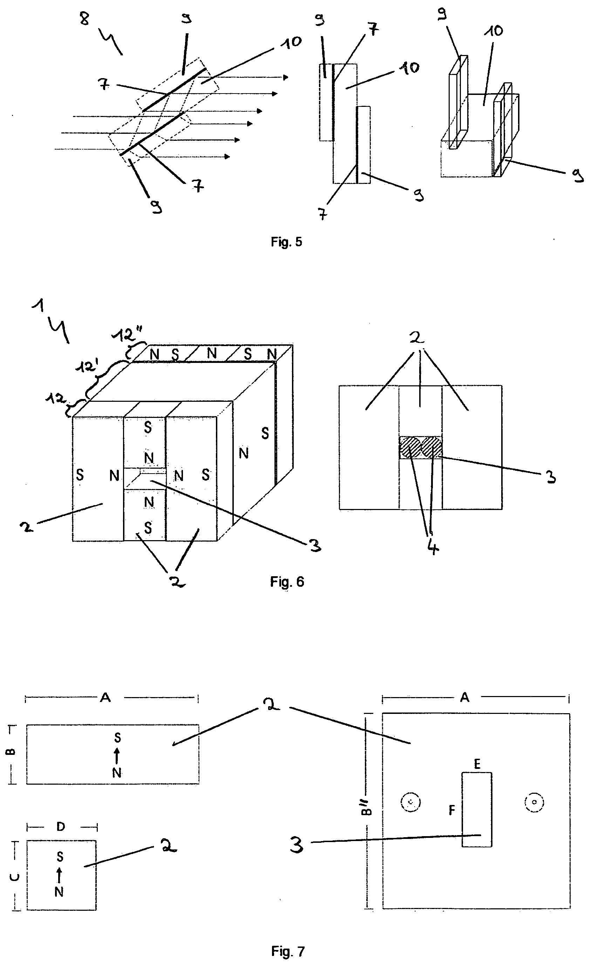

Die Figuren 3 und 4 zeigen eine bevorzugte erfindungsgemäße Ausführungsform des Isolators (5) mit optischem Strahlengang (6) in Transmissions- (Fig. 3) bzw. Sperrrichtung (Fig. 4). Bei dieser Anordnung erfahren beide Polarisationsrichtungen die gleiche optische Weglänge, so dass es zu einer sehr guten Überlagerung der beiden Polarisationen hinter der Anordnung kommt, wobei die Genauigkeit der Überlagerung der Genauigkeit in der Ausrichtung der Polarisatorflächen (7) zueinander entspricht und typisch < 10" beträgt. Die erfindungsgemäße Polarisatoranordnung (8) besteht aus zwei Brewsterpolarisatoren (9), die vorzugsweise an einen gemeinsamen Grundkörper (10) aus gleichem Material angesprengt werden (Fig. 5). Ebenfalls dargestellt ist ein Polarisationsrotator (11), der durch seinen Zusatz zu einem Faraday-Rotator eine Drehung der Polarisation um 0° bzw. 90° erzeugt, und so eine Ausrichtung der Polarisatoren (9) in einer Ebene ermöglicht.

Die Polarisatorbeschichtung (nicht dargestellt) ist hierbei nur auf einem Teil einer der beiden Polarisatorflächen (7) angebracht, so dass in dem freigelassenen Teil eine Ansprengung an einen Grundkörper (10) erfolgen kann wie in Fig. 5 schematisch dargestellt. Damit wird die hohe Genauigkeit des Grundkörpers (10) auf die Ausrichtung der Polarisatorflächen (7) zueinander übertragen.

Bei der in Figur 6 gezeigten Ausführungsform handelt es sich um eine schematische Darstellung einer erfindungsgemäßen Magnetanordnung (1), welche aus 8 quaderförmigen Magneten (2) besteht, sowie einem quaderförmigen Magneten (2) mit einer Bohrung. Hierdurch werden drei Magnetebenen (12, 12', 12") gebildet, wobei die erste und dritte Ebene (12, 12") aus jeweils 4 quaderförmigen Magneten (2) zusammengesetzt ist und die zweite (mittlere) Ebene (12') durch den Magneten (2) mit der Bohrung gebildet wird. Die Größe der Bohrung entspricht der freien Apertur (3) der umschließenden Magnetebenen (12, 12"), welche wiederum in einer Richtung dem doppelten Durchmesser des Faradaymediums (4) entspricht, so dass zwei Faradaymedien (4) nebeneinander angeordnet werden können.

In Figur 7 sind die Abmessungen von Magneten (2) für die in Fig. 6 schematisch dargestellte Magnetanordnung (1) mit Magneten (2) der Klasse N40UH mit einer Remanenzmagnetisierung von Br = 1,28 T dargestellt. Die Kantenlängen A und B bzw. B" sowie C und D betragen im vorliegenden Beispiel A= 65 mm, B = 18,5 mm, B" = 63 mm, C = 27,8 mm und D = 25,8 mm. Die Höhe h der Magnete (2), welche in der Schnittzeichnung nicht dargestellt werden kann, beträgt für alle drei Magnete (2) in diesem speziellen Fall h = 20 mm. Die freie Apertur (3) beträgt E x F, wobei hier beispielhaft E = 9,3 mm und F = 26 mm, und die Kristalllänge des Faradaymediums (4) auf ca. 15 mm und für eine Wellenlänge von 1064 mm ausgelegt ist.

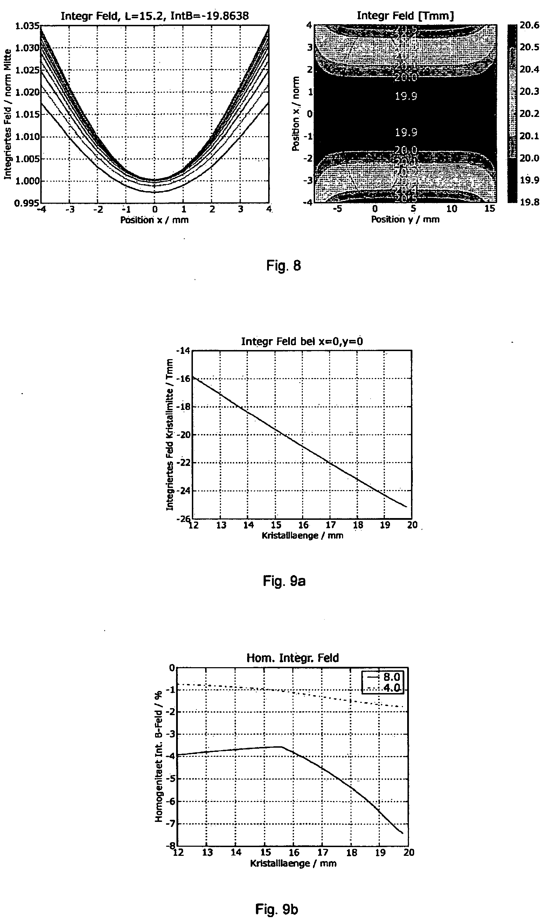

Durch diese Anordnung wird ein sehr homogenes, entlang der optischen Achse integriertes, Magnetfeld mit einer Abweichung von unter 4 % über die Höhe und Breite von 8 mm, bzw. unter 1 % über eine Höhe und Breite von 4 mm erreicht, wie die Simulation in Fig. 8 und die Berechnungen in Fig. 9a und 9b zeigen.

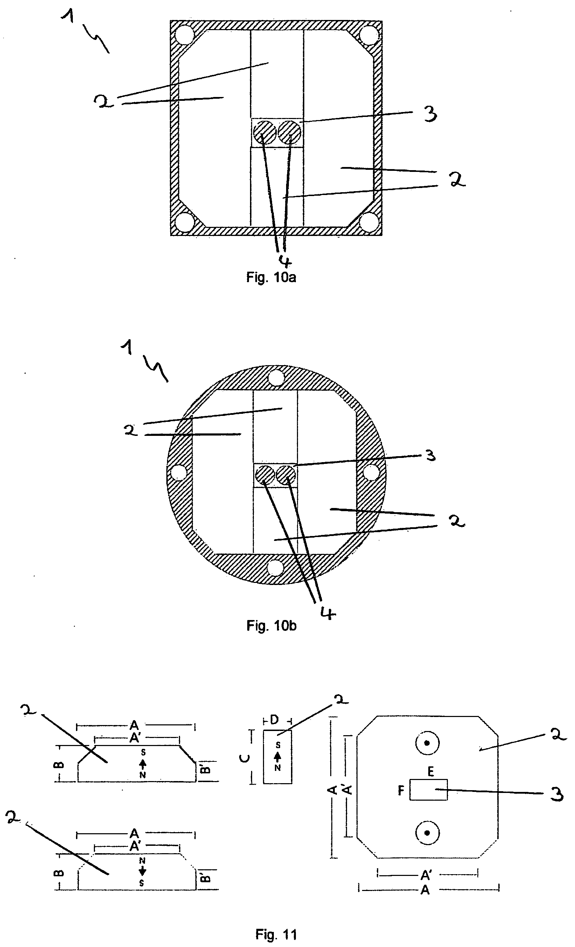

In den Figuren 10a und 10b sind weitere erfindungsgemäße Ausführungsformen der Magnetanordnung (1) gezeigt. Bei den dargestellten Magneten (2) handelt es sich um Magnete (2) der Klasse N40UH mit einer Remanenzmagnetisierung von Br = 1,28 T. Die freie Apertur (3) der Magnetanordnung beträgt E x F, wobei E = 5 mm und F = 8 mm, und ist für eine Kristalllänge des Faradaymediums von ca. 15 mm und bei einer Wellenlänge von 1064 mm ausgelegt. Die quaderförmigen Magnete (2) der Magnetanordnung (1) sind an den äußeren Ecken der Anordnung (1) angefast, wodurch die Kantenlängen A und B um einen Teil gekürzt werden und somit eine Kantenlänge von A' und B' aufweisen.

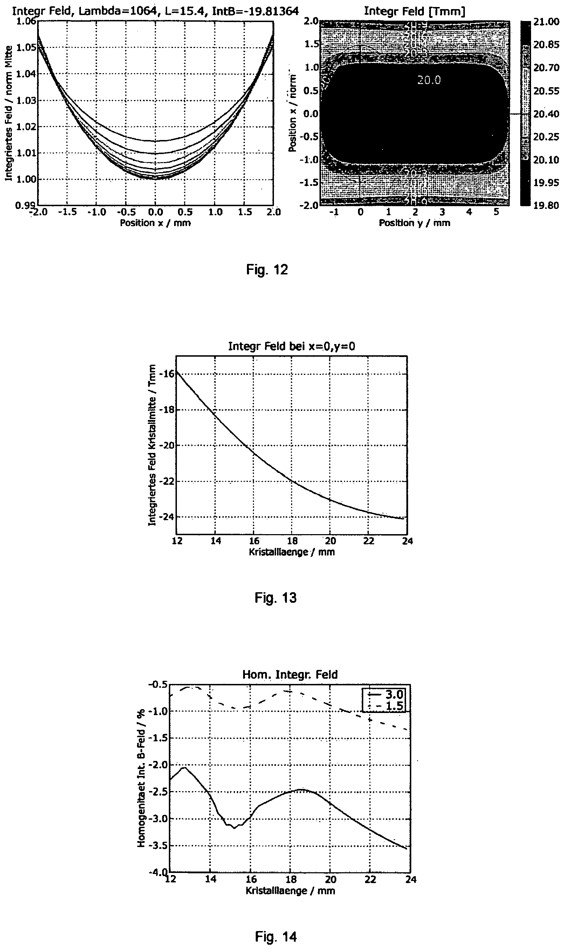

Im vorliegenden Beispiel betragen die Kantenlängen A = 34 mm, A' = 24 mm, B = 13 mm, B' = 8 mm, C = 14,5 mm und D = 7,6 mm: Die Höhe h der Magnete (2) beträgt h = 15 mm, und für den Magneten (2) mit Bohrung h' = 14 mm. Mit den in Figur 11 gezeigten Abmessungen der Magnete (2) wird ein sehr homogenes, entlang der optischen Achse integriertes, Magnetfeld mit einer Abweichung von unter 3,5 % über die Höhe und Breite von 3 mm, bzw. unter 1 % über eine Höhe und Breite von 1,5 mm erreicht. Die Figuren 12-14 zeigen die zugehörigen Simulationen und Berechnungen analog dem vorangegangenen Ausführungsbeispiel.

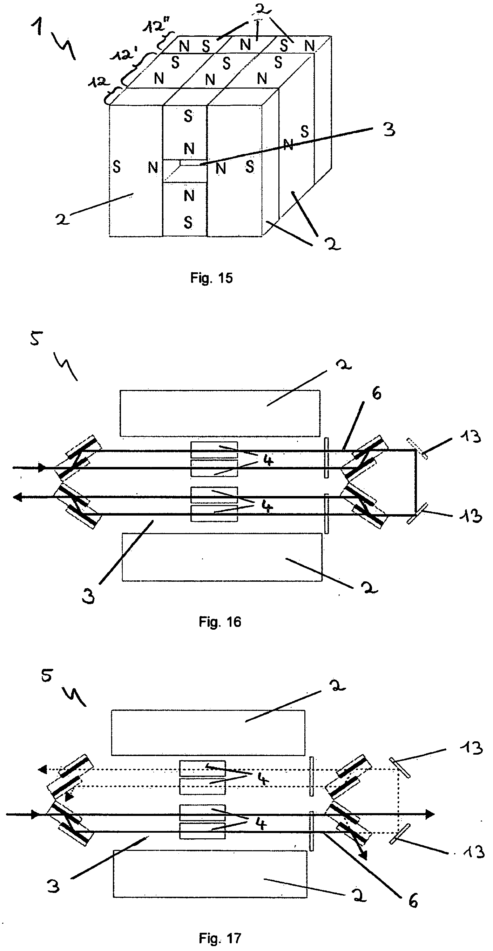

Die in Figur 15 gezeigte erfindungsgemäße Ausführungsform der Magnetanordnung (1) besteht aus 12 quaderförmigen Magneten (2), wobei wiederum drei Magnetebenen (12, 12', 12") gebildet werden, die im vorliegenden Ausführungsbeispiel aus jeweils 4 quaderförmigen Magneten (2) zusammengesetzt sind. Dies bietet den Vorteil einer einfachen und damit kostengünstigen Herstellbarkeit der Magnete (2).

In den Figuren 16 und 17 ist eine erfindungsgemäße, zweistufige Ausführungsform des optischen Isolators (5) mit 4 Faradaymedien (4), welche innerhalb der Apertur (3) angeordnet sind, gezeigt. Hierbei wird durch ein serielles Durchlaufen von zwei optischen Isolatoren (5) mittels Faltungselementen (13) wie beispielsweise Spiegeln eine sehr kompakte Anordnung ermöglicht (2-stufiger optischer Isolator). Dies bietet den Vorteil einer höheren Isolation bei gleichzeitig minimaler Zunahme des Platzbedarfs. Der optische Strahlengang (6) ist in Transmissionsrichtung (Fig. 16) und in Sperrrichtung (Fig. 17) dargestellt.

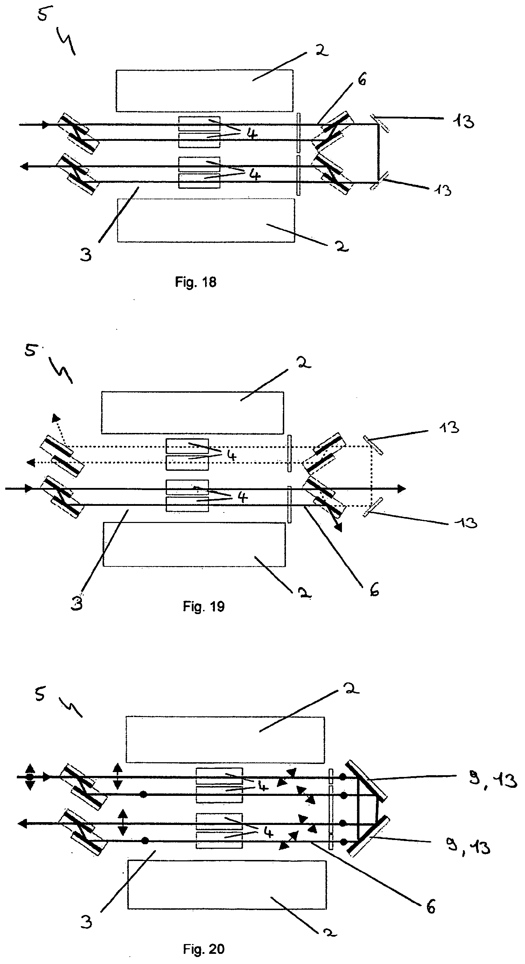

Die Figuren 18 und 19 zeigen eine weitere erfindungsgemäße Ausführungsform eines 2-stufigen optischen Isolators (5) für unpolarisierte Strahlung. Analog zu den Figuren 16 und 17 ist jeweils der optische Strahlengang (6) in Transmissionsrichtung (Fig. 18) und in Sperrrichtung (Fig. 19) dargestellt. In dieser Ausführungsform ist der optische Strahlengang (6) für die beiden Polarisationsrichtungen unterschiedlich, wodurch Interferenzeffekte durch kohärente Überlagerung vermieden werden.

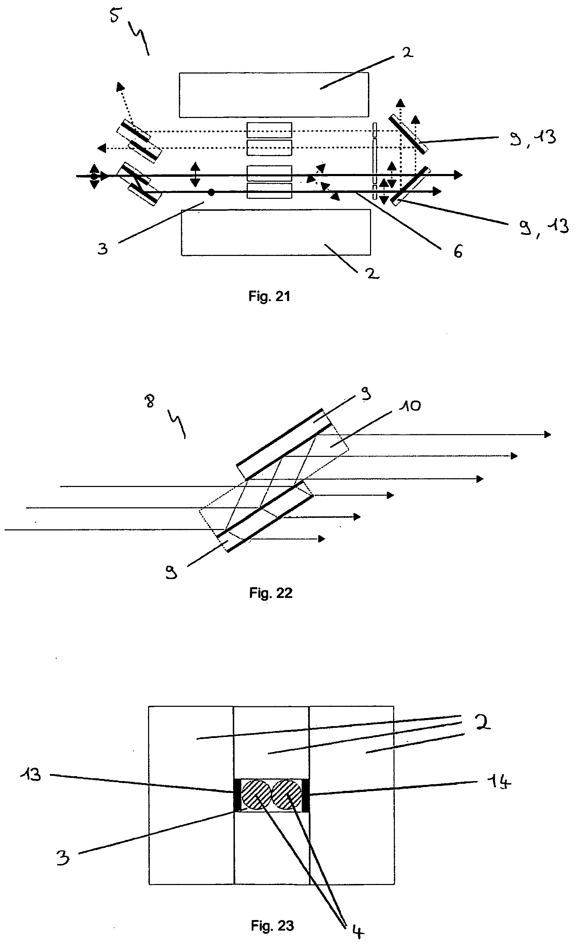

Die Figuren 20 und 21 zeigen eine weitere erfindungsgemäße Ausführungsform eines 2-stufigen optischen Isolators (5). Analog zu den vorherigen Ausführungsbeispielen ist jeweils der optische Strahlengang (6) in Transmissionsrichtung (Fig. 20) und in Sperrrichtung (Fig. 21) dargestellt. In dieser Ausführungsform sind 4 Faradaymedien (4) in der freien Apertur (3) angeordnet. Durch ein serielles Durchlaufen von zwei optischen Isolatoren (5) wird eine sehr kompakte Anordnung bereitgestellt. Gegenüber den beiden vorangegangenen Ausführungsbeispielen werden die Faltungselemente (13) als Polarisatoren (9) ausgelegt und somit ein Aufbau mit weniger optischen Elementen bereitgestellt.

In Figur 22 ist eine schematische Darstellung einer weiteren erfindungsgemäßen Polarisatoranordnung (8) gezeigt, bestehend aus zwei Polarisatoren (9), welche an einen gemeinsamen Grundkörper (10) angesprengt sind. In dieser Anordnung ist mindestens einer der Polarisatoren (9) beidseitig beschichtet, wodurch eine höhere Auslöschung in Sperrrichtung erreicht wird. Ein weiterer Vorteil einer solchen Anordnung ist, dass durch die Beschichtung eingebrachte Spannungen, die zu einer Verformung des Substrates führen können, auf diese Weise einander kompensieren können und so eine Verformung vermieden oder zumindest minimiert werden kann.

Weitere erfindungsgemäße Ausführungsformen betreffen einen optischen Isolator (5) für lineare Polarisation, der analog den oben dargestellten Ausführungsformen der optischen Isolatoren (5) 1-stufig oder 2-stufig ausgebildet sein kann und gefaltet oder ungefaltet ausgeführt sein kann (nicht dargestellt).

In einer weiteren erfindungsgemäßen Ausführungsform des optischen Isolators (5) werden die optischen Strahlengänge (6) nach Durchlaufen der Polarisatoren (9) unter einem Winkel weitergeführt, wodurch die Anordnung bei gleicher Funktionalität mit nur einem Faradymedium (4) ausgestattet sein kann.

In einer weiteren Ausführungsform des 2-stufigen optischen Isolators (5) können die Magnetebenen (12, 12', 12", 12"', 12"") der Magnetanordnung (1) hintereinanderliegen (ungefaltete Ausführungsform), wobei die sich berührenden Magnete (2) der dritten und vierten Magnetebenen (12", 12'") verschmolzen sein können (nicht dargestellt).

Die in Figur 23 gezeigte erfindungsgemäße Ausführungsform der Magnetanordnung (1) besteht aus quaderförmigen Magneten (2) mit Abstandshaltern (14) in der freien Apertur (3), in der hier beispielhaft zwei Faradaymedien (4) angeordnet sind.

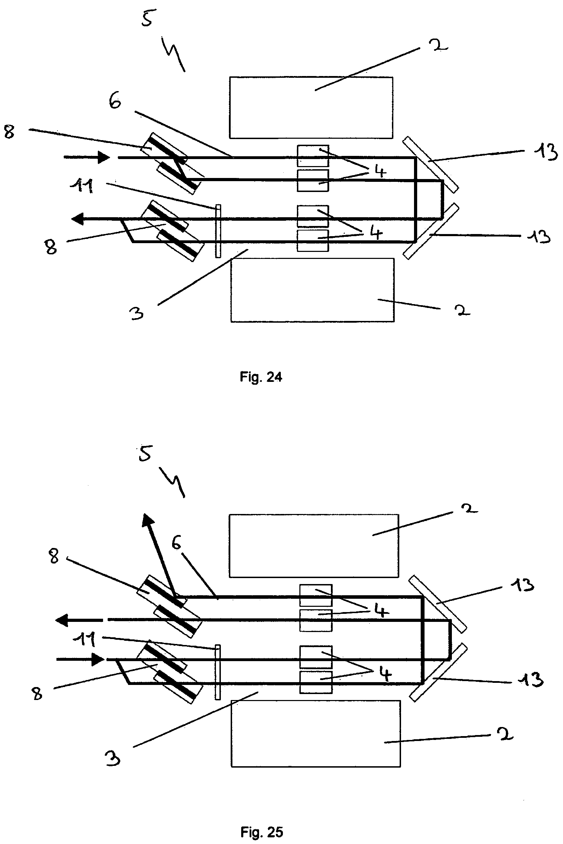

Figuren 24 und 25, sowie 26 und 27 zeigen weitere erfindungsgemäße Ausführungsformen des Isolators (5), jeweils mit Strahlengang (6) in Transmissions- bzw. Sperrrichtung, wobei der Isolator (5) derart gefaltet ist, dass der optische Strahlengang (6) den Isolator (5) zweifach durchläuft.

Vorteilig in der aus Fig. 24 und 25 gezeigten Anordnung ist, dass die Länge, in welcher in der freien Apertur (3) ein starkes Magnetfeld erzeugt werden muss, gegenüber der linearen Anordnung halbiert werden kann, was Größe der notwendigen Magnetanordnung (1) reduziert.

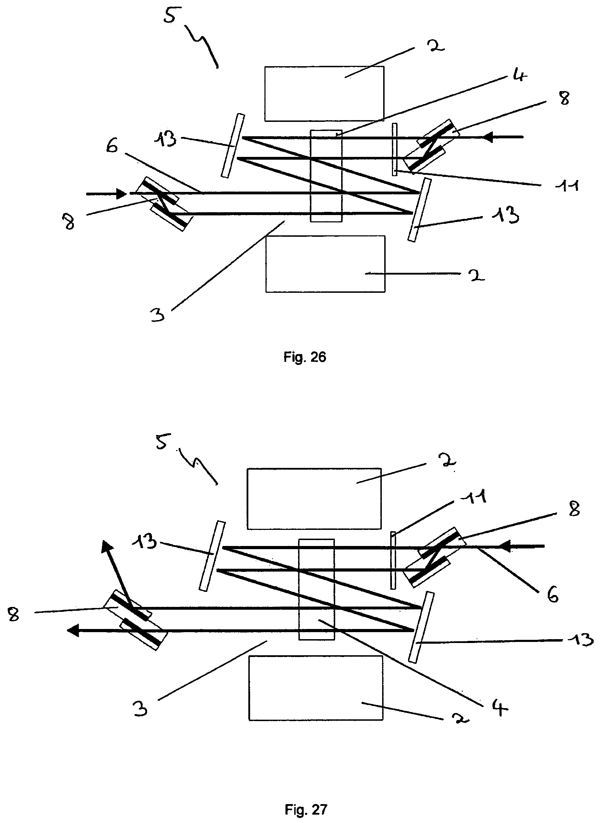

Vorteilig in der Anordnung aus Fig. 26 und 27 ist, dass die Länge, in welcher in der freien Apertur (3) ein starkes Magnetfeld erzeugt werden muss, gegenüber der linearen Anordnung gedrittelt werden kann, was Größe der notwendigen Magnetanordnung (1) weiter reduziert.

Ein weiterer Vorteil dieser Anordnung ist, dass durch geeignete Auslegung der Strahlengänge im Faradaymedium (4), welches die Form eines Slab annehmen kann, eine gegenüber einem Stab verbesserte Verteilung der absorbierten Leistung erreicht werden kann und durch geeignete Abführung der Wärme über die großen Flächen den Faradaymediums (4) eine höhere Isolation bei hoher Leistung erreicht werden kann.

Es versteht sich, dass auch Faltungen mit drei- und mehrfachen Durchgängen durch die Magnetanordnung (1) von der Erfindung erfasst sind (nicht dargestellt).

## Patentansprüche

1. Optischer Isolator (5) mit einem Faraday-Rotator, der eine Magnetanordnung (1) mit drei Magnetebenen (12', 12", 12'") mit einer durchgehenden Apertur (3) und ein oder mehrere Faradaymedien (4) aufweist, welche in der Apertur (3) der Magnetanordnung (1) aufgenommen sind, sowie mit je einer Polarisatoranordnung (8) vor und hinter den Faradaymedien (4),
**dadurch gekennzeichnet,**
**dass**
die erste und dritte Magnetebene (12', 12'") aus jeweils vier quaderförmigen Magneten (2) zusammengesetzt ist, die um die Apertur (3) herum angeordnet sind, und dass die mittlere Magnetebene (12") entweder durch einen einzigen
quaderförmigen Magneten (2) mit einer die Apertur (3) bildenden Bohrung gebildet ist oder aus vier quaderförmigen Magneten (2), die um die Apertur (3) herum angeordnet sind, zusammengesetzt ist.

2. Optischer Isolator nach Anspruch 1, **dadurch gekennzeichnet, dass** die äußeren Ecken der Magnetanordnung (1) angefast sind.

3. Optischer Isolator nach einem der obigen Ansprüche, **dadurch gekennzeichnet, dass** die Magnetanordnung (1) innerhalb der Apertur (3) ein Magnetfeld von = 0,7 T erzeugt.

4. Optischer Isolator nach einem der obigen Ansprüche, **dadurch gekennzeichnet, dass** die Kantenlänge der Apertur (3) der Magnetanordnung (1) mindestens dem Durchmesser des Faradaymediums (4) entspricht.

5. Optischer Isolator nach einem der obigen Ansprüche, **dadurch gekennzeichnet, dass** die Apertur (3) der Magnetanordnung (1) mindestens dem Durchmesser des Faradaymediums (4) entspricht und vorzugsweise kleiner als das 2-fache dieses Durchmessers ist.

6. Optischer Isolator nach einem der obigen Ansprüche, **dadurch gekennzeichnet, dass** die Apertur (3) der Magnetanordnung (1) mindestens den aufsummierten Durchmessern der nebeneinander angeordneten Faradaymedien (4) für Transmissionsrichtung und Sperrrichtung entspricht und vorzugsweise kleiner als das 2-fache dieser Durchmesser ist.

7. Optischer Isolator nach einem der obigen Ansprüche, **dadurch gekennzeichnet, dass** er mit mindestens einem Polarisationsrotator (11) ausgestattet ist, der die Polarisationsrichtung der optischen Strahlung zusammen mit dem Faradaymedium (4) in der einen Richtung um 0° und in entgegengesetzter Richtung um 90° dreht.

8. Optischer Isolator nach einem der obigen Ansprüche, **dadurch gekennzeichnet, dass** die Polarisatoranordnungen (8) jeweils die optische Strahlung in zwei senkrecht zueinander polarisierte Strahlungsanteile unter genau definiertem Winkel und Versatz aufspalten oder zwei derartige senkrecht zueinander polarisierte Strahlungsanteile unter genau definiertem Winkel und Versatz miteinander überlagern.

9. Optischer Isolator nach einem der obigen Ansprüche, **dadurch gekennzeichnet, dass** die Polarisatoranordnungen (8) jeweils zwei Polarisatoren (9) aufweisen.

10. Optischer Isolator nach Anspruch 9, **dadurch gekennzeichnet, dass** die beiden Polarisatoren (9) einer Polarisatoranordnung (8) an einen gemeinsamen Grundkörper (10) befestigt sind, insbesondere geklebt oder mittels eines Anschlags an einem Referenzkörper und Klebung an einem Trägerelement befestigt sind.

11. Optischer Isolator nach Anspruch 9 oder 10, **dadurch gekennzeichnet, dass** die Polarisatorflächen (7) der beiden Polarisatoren (9) zueinander mit einer Genauigkeit von kleiner als 10° ausgerichtet sind.

12. Optischer Isolator nach einem der obigen Ansprüche, **dadurch gekennzeichnet, dass** ein oder mehrere Faradaymedien (4) innerhalb der Apertur (3) angeordnet sind und mittels Faltung des optischen Strahlengangs (6) durch Faltungselemente (13) und mehrfaches Durchlaufen des Magnetfeldes ein 1- oder mehrstufiger Isolator (5) bereitgestellt ist.

13. Optischer Isolator nach einem der obigen Ansprüche, **dadurch gekennzeichnet, dass** zwei oder mehrere optische Isolatoren (5) hintereinander angeordnet sind, wodurch ein 2- oder mehrstufiger Isolator (5) bereitgestellt ist.

14. Optischer Isolator nach einem der obigen Ansprüche, **dadurch gekennzeichnet, dass** in der Apertur (3) einer aus vier Magneten (2) zusammengesetzten Magnetebene (12', 12", 12'") Abstandshalter (14) für die Magnete (2) angeordnet sind.

## Claims

1. Optical insulator (5) comprising a Faraday rotator having a magnet arrangement (1) with three magnet planes (12', 12", 12'") with a continuous aperture (3) and one or more Faraday media (4) which are accommodated in the aperture (3) of the magnet arrangement (1), and one polarizer arrangement (8) in front of and one behind the Faraday media (4), **characterized in that**
the first and the third magnet plane (12', 12"') are each composed of four cube-shaped magnets (2) which are arranged around the aperture (3), and the middle magnet plane (12") is formed either by one single cube-shaped magnet (2) with a bore forming the aperture (3) or by four cube-shaped magnets (2) which are arranged around the aperture (3).

2. Optical insulator according to claim 1, **characterized in that** the outer corners of the magnet arrangement (1) are chamfered.

3. Optical insulator according to any one of the preceding claims, **characterized in that** the magnet arrangement (1) generates a magnetic field of 0.7 T inside the aperture (3).

4. Optical insulator according to any one of the preceding claims, **characterized in that** the edge length of the aperture (3) of the magnet arrangement (1) corresponds to at least the diameter of the Faraday medium (4).

5. Optical insulator according to any one of the preceding claims, **characterized in that** the aperture (3) of the magnet arrangement (1) corresponds to at least the diameter of the Faraday medium (4) and is preferably smaller than twice this diameter.

6. Optical insulator according to any one of the preceding claims, **characterized in that** the aperture (3) of the magnet arrangement (1) corresponds to at least the added diameters of the Faraday media (4) arranged next to one another for transmission direction and blocking direction and is preferably smaller than twice these diameters.

7. Optical insulator according to any one of the preceding claims, **characterized in that** it is provided with at least one polarization rotator (11) that rotates the polarization direction of the optical radiation together with the Faraday medium (4) in one direction through 0° and in the opposite direction through 90°.

8. Optical insulator according to any one of the preceding claims, **characterized in that** each of the polarizer arrangements (8) splits the optical radiation into two radiation parts, which are polarized perpendicularly with respect to one another, at an exactly defined angle and offset, or superimposes two such radiation parts, which are polarized perpendicularly with respect to one another, at an exactly defined angle and offset.

9. Optical insulator according to any one of the preceding claims, **characterized in that** each of the polarizer arrangements (8) has two polarizers (9).

10. Optical insulator according to claim 9, **characterized in that** the two polarizers (9) of a polarizer arrangement (8) are mounted to a common base body (10), in particular glued or mounted to a carrier element using a stop on a reference element and adhesive.

11. Optical insulator according to claim 9 or 10, **characterized in that** the polarizer surfaces (7) of the two polarizers (9) are aligned with respect to each other with an accuracy of less than 10°.

12. Optical insulator according to any one of the preceding claims, **characterized in that** one or more Faraday media (4) are arranged inside the aperture (3) and a one-stage or multi-stage insulator (5) is provided through folding of the optical path (6) by folding elements (13) and by multiple passage of the magnetic field.

13. Optical insulator according to any one of the preceding claims, **characterized in that** two or more optical insulators (5) are arranged behind one another, thereby providing a two-stage or multi-stage insulator (5).

14. Optical insulator according to any one of the preceding claims, **characterized in that** spacers (14) for the magnets (2) are arranged in the aperture (3) of a magnet plane (12', 12", 12"') composed of four magnets (2).

## Revendications

1. Isolateur optique (5) comprenant un rotateur de Faraday qui présente un ensemble d'aimants (1) comportant trois plans d'aimants (12', 12", 12"') avec une ouverture traversante (3) et un ou plusieurs milieux de Faraday (4) qui sont reçus dans l'ouverture (3) de l'ensemble d'aimants (1), ainsi qu'un ensemble de polariseurs (8) devant et derrière les milieux de Faraday (4),
**caractérisé en ce**
**que** le premier et le troisième plan d'aimants (12', 12"') sont composés chacun de quatre aimants parallélépipédiques (2) qui sont disposés autour de l'ouverture (3), et
**que** le plan d'aimants intermédiaire (12") est soit formé par un seul aimant parallélépipédique (2) pourvu d'un perçage formant l'ouverture (3), soit composé de quatre aimants parallélépipédiques (2) qui sont disposés autour de l'ouverture (3).

2. Isolateur optique selon la revendication 1, **caractérisé en ce que** les coins extérieurs de l'ensemble d'aimants (1) sont biseautés.

3. Isolateur optique selon l'une des revendications précédentes, **caractérisé en ce que** l'ensemble d'aimants (1) produit un champ magnétique de 0,7 T à l'intérieur de l'ouverture (3).

4. Isolateur optique selon l'une des revendications précédentes, **caractérisé en ce que** la longueur d'arête de l'ouverture (3) de l'ensemble d'aimants (1) correspond au moins au diamètre du milieu de Faraday (4).

5. Isolateur optique selon l'une des revendications précédentes, **caractérisé en ce que** l'ouverture (3) de l'ensemble d'aimants (1) correspond au moins au diamètre du milieu de Faraday (4) et est de préférence plus petite que le double de ce diamètre.

6. Isolateur optique selon l'une des revendications précédentes, **caractérisé en ce que** l'ouverture (3) de l'ensemble d'aimants (1) correspond au moins à la somme des diamètres des milieux de Faraday (4) juxtaposés pour la direction de transmission et la direction de blocage et est de préférence plus petite que le double de ces diamètres.

7. Isolateur optique selon l'une des revendications précédentes, **caractérisé en ce qu'**il est équipé d'au moins un rotateur de polarisation (11) qui fait tourner la direction de polarisation du rayonnement optique en même temps que le milieu de Faraday (4) de 0° dans un sens et de 90° dans le sens opposé.

8. Isolateur optique selon l'une des revendications précédentes, **caractérisé en ce que** les ensembles de polariseurs (8) séparent chacun le rayonnement optique en deux parties de rayonnement polarisées perpendiculairement l'une par rapport à l'autre selon un angle et un décalage précisément définis ou font interférer entre elles deux telles parties de rayonnement polarisées perpendiculairement l'une par rapport à l'autre selon un angle et un décalage précisément définis.

9. Isolateur optique selon l'une des revendications précédentes, **caractérisé en ce que** les ensembles de polariseurs (8) présentent chacun deux polariseurs (9).

10. Isolateur optique selon la revendication 9, **caractérisé en ce que** les deux polariseurs (9) d'un ensemble de polariseurs (8) sont fixés sur un corps de base (10) commun, en particulier collés ou fixés au moyen d'une butée sur un corps de référence et par collage sur un élément de support.

11. Isolateur optique selon l'une des revendications 9 ou 10, **caractérisé en ce que** les surfaces de polariseur (7) des deux polariseurs (9) sont alignées les unes par rapport aux autres avec une précision inférieure à 10°.

12. Isolateur optique selon l'une des revendications précédentes, **caractérisé en ce qu'**un ou plusieurs milieux de Faraday (4) sont disposés à l'intérieur de l'ouverture (3) et qu'un isolateur (5) à un ou plusieurs étages est obtenu par repliement du trajet optique du rayonnement (6) par des éléments de repliement (13) et passage multiple par le champ magnétique.

13. Isolateur optique selon l'une des revendications précédentes, **caractérisé en ce que** deux ou plusieurs isolateurs optiques (5) sont disposés les uns derrière les autres de manière à mettre à disposition un isolateur (5) à deux ou plusieurs étages.

14. Isolateur optique selon l'une des revendications précédentes, **caractérisé en ce que** des entretoises (14) pour les aimants (2) sont disposées dans l'ouverture (3) d'un plan d'aimants (12', 12", 12"') composé de quatre aimants (2).
